Europäisches Patentamt

European Patent Office

Office européen des brevets

(19)

(11) Veröffentlichungsnummer: **0 068 364**
**A1**

(12) **EUROPÄISCHE PATENTANMELDUNG**

(21) Anmeldenummer: 82105378.2

(22) Anmeldetag: 18.06.82

(51) Int. Cl.³: **C 02 F 3/20,** B 01 D 21/24,
F 16 K 11/06

(30) Priorität: 20.06.81 DE 3124313

(43) Veröffentlichungstag der Anmeldung: 05.01.83
Patentblatt 83/1

(84) Benannte Vertragsstaaten: IT

(71) Anmelder: Menzel GmbH. + Co., Hedelfinger Strasse 95,
D-7000 Stuttgart 60 (DE)

(72) Erfinder: Zink, Jürgen, Schilfweg 3,
D-7000 Stuttgart 70 (DE)

(74) Vertreter: Grupe, Peter, Dipl.-Ing. et al,
Patentanwaltsbüro
Tiedtke-Bühling-Kinne-Grupe-Pellmann-Grams
Bavariaring 4, D-8000 München 2 (DE)

(54) Verfahren und Vorrichtung zur Einwirkung auf in einer vorzugsweise wässrigen Flüssigkeit befindlichen Stoffen.

(57) Bei diesem Verfahren zur Einwirkung auf in einer vorzugsweise wässrigen Flüssigkeit befindlichen Stoffen wie Schlamm, Sand, Öl od.dgl., insbesondere Belebungsbekken einer Abwasserreinigungsanlage, wird ein Gas durch mehrere Gasaustrittsdüsen in das Abwasser eingebracht.

Zur Erzielung einer stoßweisen Stoffaufwirbelung bzw. Stofffortbewegung aus Stoffanreicherungsbereichen im wesentlichen bewegungsarmer Zonen der Flüssigkeit wird das Gas mit Überdruck ruckartig gegen den Stoff in die Flüssigkeit eingedrückt, wobei der größere Teil der insgesamt vorhandenen Gasaustrittsdüsen abgesperrt ist und der Gasdruckausstoß nur aus einem zahlenmäßig geringen Teil der insgesamt vorhandenen Gasaustrittsdüsen erfolgt.

# TIEDTKE – BÜHLING – KINNE
# GRUPE – PELLMANN – GRAMS

**Patentanwälte und Vertreter beim EPA**
Dipl.-Ing. H. Tiedtke
Dipl.-Chem. G. Bühling
Dipl.-Ing. R. Kinne
Dipl.-Ing. P. Grupe
Dipl.-Ing. B. Pellmann
Dipl.-Ing. K. Grams

**Bavariaring 4, Postfach 20 24 03**
**8000 München 2**
Tel.: 0 89 - 53 96 53
Telex: 5-24 845 tipat
cable: Germaniapatent München

- 1 -

0068364

18. Juni 1982

EP 2248

Menzel GmbH & Co.

Stuttgart

## Verfahren und Vorrichtung zur Einwirkung auf in einer vorzugsweise wässrigen Flüssigkeit befindlichen Stoffen

Die Erfindung betrifft ein Verfahren und eine Vorrichtung zur Einwirkung auf in einer vorzugsweise wässrigen Flüssigkeit befindlichen Stoffen wie Schlamm, Sand, Öl oder dergleichen, insbesondere Belebungsbecken einer Abwasserreinigungsanlage, wobei ein Gas durch mehrere Gasaustrittsdüsen einbringbar ist.

Zur Behandlung und Aufbereitung von Abwasser bzw. Schlamm in einem Becken ist es bekannt, den Beckeninhalt zur Aktivierung des Behandlungsvorgangs durch entsprechende Flüssigkeitsströmungen zu bewegen bzw. umzuwälzen, wobei z. B. Oberflächenbelüfter, Drehbelüfter od. dgl. eingesetzt werden. Hierbei treten in der Praxis insbesondere bei Belebungsbecken von Abwasserreinigungsanlagen immer wieder dahingehende Nachteile auf, daß gerade bei im Querschnitt rechteckähnlichen Beckengestaltungen Schlammablagerungen in Strömungstotzonen des Beckens auftreten, wodurch die Abwasserbehandlung in zunehmendem Maße beeinträchtigt und keine zufriedenstellende Aufbereitungsleistung erzielt wird. Gerade im Zuge eines zunehmenden Energiebewußtseins ist man bestrebt, derartig unrentable bzw. kostenaufwendige Behandlungsverfahren nicht ohne weiteres hinzunehmen.

Demgemäß besteht die Aufgabe der Erfindung darin, ein Verfahren der eingangs beschriebenen Art so zu verbessern, daß eine stoßweise steuerbare Stoffaufwirbelung bzw. Stoffortbewegung in bzw. auf der Flüssigkeit möglich ist.

Diese Aufgabe wird erfindungsgemäß dadurch gelöst, daß in Stoffanreicherungsbereichen im wesentlichen bewegungsarmer Zonen der Flüssigkeit das Gas nur aus einem zahlenmäßig geringen Teil der insgesamt vorhandenen Gasaustrittsdüsen stoßartig eingetragen wird.

Vorteilhafte Weiterbildungen und bevorzugte Ausgestaltungen der Erfindung sind durch die Merkmale der Unteransprüche und der nachfolgenden Beschreibungen gegeben.

Dabei kann es zur Erhöhung der Leistungsfähigkeit bezüglich der Aufwirbelung günstig sein, den Gasausstoß ausschließlich aus einer einzigen Gasaustrittsdüse durchzuführen, währenddessen die anderen Gasaustrittsdüsen abgesperrt sind, so daß sich der gesamte Gasdruck auf eine einzige Stelle konzentriert und hier somit hoch wirksam ist. Weiterhin kann vorteilhaft der Gasausstoß durch die Gasaustrittsdüsen hintereinander erfolgen. Dabei kann die Steuerung der einzelnen Gasdruckstöße so durchgeführt werden, daß stets dann eine Gasaustrittsdüse gesperrt wird, wenn eine neue freigegeben wird. Somit sind im wesentlichen immer die gleichen Gasdruckverhältnisse im Bereich der gerade in Funktion befindlichen Gasaustrittsdüsen gegeben.

Eine besonders günstige Einwirkung auf abgelagerten
Schlamm oder dergleichen kann dadurch erzielt werden,
daß der Gasausstoß zunächst an einer Gasaustrittsdüse
erfolgt, die beispielsweise in einem äußeren Totwinkel-
Schlammablagerungsbereich des Beckens angeordnet ist.
Von hier ausgehend wird der Gasausstoß über entsprechend
angeordnete Gasaustrittsdüsen schrittweise hintereinander in Richtung zum Beckeninnern bzw. in Richtung zum
Stoffaustrag aus dem Becken durchgeführt. Es ist somit
praktisch ein fortschreitender Stofftransport möglich.
Ein besonders guter Effekt wird erzielt, wenn das Gas
an der jeweiligen Gasaustrittsdüse in grob- bzw. großblasiger Form ruckartig ausgestoßen wird, da hierbei
eine intensive Krafteinwirkung erfolgt.

Darüber hinaus ist es besonders günstig, gleichzeitig
während einer feinblasigen Sauerstoff- bzw. Luftsauerstoffeinbringung in das Abwasser den Grobblasen-Gasausstoß zur Belebtschlammabsetzverhinderung bzw. -auflockerung
vorzunehmen. Es werden also vorteilhaft zwei verschiedene
Gaseinbringungen in das Abwasser praktisch parallel durchgeführt. Weiterhin kann es von besonderem Vorteil sein,
gerade bei einer feinblasig intermittierenden Belüftung
bzw. Sauerstoffeingabe ins Abwasser bei abgeschalteter
Feinbelüftung während einer reduzierten bzw. vollständig
unterbundenen Begasung des Belebtschlamms den Grobblasen-
Gasausstoß vorzunehmen, da die Wasserströmung, sofern keine
zusätzlichen Umwälzaggregate vorgesehen sind, bei abgeschalteter Feinbelüftung während einer solchen Phase zumeist sehr gering bzw. schwach sind.

Zur Durchführung des erfindungsgemäßen Verfahrens kann es
zweckmäßig sein, den Gasaustrittsdüsen im Becken eine Druckgasverteilervorrichtung zuzuordnen, über die der Gasausstoß durch die jeweiligen Gasaustrittsdüsen exakt zugeteilt werden kann. Die Gasaustrittsdüsen können in einfacher Ausführung als Querbohrungen ausgebildet sein, die in die Wandung eines Rohres eingebracht sind. Ein solches Rohr würde somit einen Düsenbelüfter darstellen, der gerade oder auch gebogen ausgeführt sein kann und entsprechend den Erfordernissen im Becken einzeln oder zu mehreren hintereinander angeordnet werden kann. Um zu verhindern, daß kein Abwasser in das Lüftungssystem durch die Gasaustrittsdüsen eintritt, welche gerade nicht mit Gas beaufschlagt werden, ist es zweckmäßig, den Gasaustrittsdüsen eine Rückströmsperre zuzuordnen. Eine solche Rückströmsperre kann beispielsweise als einfache Rückschlagklappe, die z.B. als Gummilappen ausgeführt ist, ausgebildet und außen an der Gasaustrittsdüse eigenfedern anliegen. Bei einem Gasausstoß wird die Rückschlagklappe zur Seite gedrückt, so daß das Gas frei austreten kann. Sobald kein Gas mehr aus der Gasaustrittsdüse heraustritt, legt sich die Rückschlagklappe selbsttätig auf die Gasaustrittsdüse und verschließt diese.

Die Gasversorgung der Gasaustrittsdüsen erfolgt vorteilhaft über Einzelzuführrohre, die ausgehend von der Druckgasverteilervorrichtung zu den Gasaustrittsdüsen verlegt sind. Die Druckgasverteilervorrichtung wird zweckmäßig über eine Hauptgaszuleitung gespeist. Eine einfache und dauerhaft funktionstüchtige Gasverteilung für einzeln hintereinander erfolgende Gasausstöße kann durch einen Lochplattenverschiebeteil erreicht werden, der in der Druckgasverteilervorrichtung gelagert ist. Durch entsprechendes Verschieben des Lochplattenverschiebeteils werden die jeweiligen Einzelzuführrohre mit Gasdruck versorgt, während die übrigen Einzelzuführrohre zu den Gasaustrittsdüsen durch die Plattenteile zwischen den Löchern des Lochplattenverschiebeteils abgesperrt werden.

Der Lochplattenverschiebeteil kann zweckmäßig als Drehverteiler ausgebildet sein, der um eine Achse drehbar
gelagert ist, so daß keine Umkehrbewegungen bzw. Hin-
und Herbewegungen durchzuführen sind und ein weitgehend
verschleißarmer Verteilerbetrieb gegeben ist. Die Schiebe-
bzw. Drehbewegung des Lochplattenschiebeverteilers wird
vorteilhaft durch ein Antriebsaggregat erzielt, das in
bevorzugter Ausführung als Druckluftmotor ausgebildet
ist. Dabei ist es selbstverständlich auch möglich, das
Antriebsaggregat beispielsweise als Elektromotor od.
dgl. auszuführen.

Ein den jeweiligen Erfordernissen entsprechender Druckgasausstoß an den Gasaustrittsdüsen kann dadurch erreicht
werden, daß der Druckgasverteilervorrichtung ein Steuergerät zugeordnet wird. Dieses Steuergerät kann sowohl
als Zeitsteuergerät als auch als Impulssteuergerät ausgeführt und im wesentlichen als Elektronikeinheit mit
eventuell zugehörigen Meßsonden ausgebildet sein.

Ein besonders wirkungsvoller und dennoch kostensparender
Druckgasausstoß kann dadurch erreicht werden, daß der
Druckgasverteilervorrichtung im Gasversorgungssystem
ein Druckspeicher wie Gasbehälter oder dergleichen zugeordnet bzw. vorgeschaltet ist. Der Druckspeicher kann
durch einen ausgesprochen klein ausgelegten Verdichter
versorgt werden, der mit geringer Leistungsaufnahme
ausgestattet ist, so daß eine kostensparende Druckgaserzeugung erzielt wird. Die Höhe des im Druckspeicher
vorhandenen Gasdruckes kann durch entsprechende Meßregelsysteme vollautomatisch betrieben werden.

Darüber hinaus kann es bei einer Abwasserreinigungsanlage vorteilhaft sein, die Druckgasverteilervorrichtung mit den Gasaustrittsdüsen an einem Gasversorgungssystem einer vorzugsweise mittels Drehbelüftern erfolgenden feinstblasigen Sauerstoff- bzw. Luftsauerstoffeinbringung ins Abwasser anzuschließen, so daß eine einheitliche Gasversorgung gegeben ist und für den intermittierenden Druckgasausstoß keine besondere Gaserzeugungseinheit erforderlich ist. Weiterhin kann es bei einer anderen Abwasserreinigungsanlage vorteilhaft sein, ein besonderes Gasdruckerzeugeraggregat für den Druckgasausstoß vorzusehen. Dieses Gasdruckerzeugeraggregat kann vorzugsweise in Unterwasserausführung im Becken angeordnet sein, so daß eine Kompaktinstallation insbesondere für eine problemlose Nachrüstung in einem bereits betriebenen Becken möglich ist.

Ein mit der Erfindung erzielter wesentlicher Vorteil besteht darin,daß eine stoßartige Aufwirbelung eines abgesetzten Schlammes möglich ist. Es liegt selbstverständlich auch im Rahmen der Erfindung, mit dem erfindungsgemäßen Verfahren nicht nur abgesetzten Schlamm stoßweise aufzuwirbeln, sondern auch anderweitige im Abwasser befindliche Stoffe und Körper, die zum Beispiel als Träger für einen biologischen Rasen hinzugegeben worden sind, in gleicher Weise aufzuwirbeln. Der Gasausstoß kann im Rahmen der Erfindung vorteilhaft auch zeitlich derart feinstufig abgestimmt sein, daß keine wesentlichen Stoffablagerungen im Becken erfolgen, sondern stets eine im wesentlichen gleichmäßige Vermischung erreicht wird. Ein wesentlicher Vorteil des erfindungsgemäßen Gasausstoßverfahrens liegt in der kostengünstigen Betriebsweise, da z. B. gemessen am Gesamtvolumen eines Abwasserbeckens die aufzubringende Leistung für den jeweiligen gezielten Gasausstoß verhältnismäßig klein ist. Es kann damit mit einfachen und kostensparenden Mitteln ein optimaler Betrieb insbesondere in einem Becken mit Abwasser
und Schlamm für deren Aktivierung erzielt werden, wobei
dieses Verfahren auch besonders vorteilhaft für Sanierungsmaßnahmen bei bereits in Betrieb befindlichen Anlagen eingesetzt werden kann.

Darüber hinaus liegt es auch im Rahmen der Erfindung,
das Verfahren und die Vorrichtung zur Umwälzung des
Schlamms insbesondere in Faultürmen anzuwenden bzw. zu
praktizieren, bei denen durch anaerobe Abbauvorgänge
Methangas gebildet wird. Hierbei wird vorteilhaft das
sich im oberen Bereich des Faulturms ansammelnde Methangas mittels Verdichter od. dgl. zur Aufwirbelung
des Schlamms stoßartig durch die jeweiligen Gasaustrittsdüsen eingetragen. Es ist deshalb günstig, das Methangas und nicht Luft für die Aufwirbelungsstöße zu verwenden, da der Sauerstoff der Luft auf Methanbakterien
toxisch wirkt und somit die Abbauvorgänge empfindlich
stören würde.

Ebenfalls liegt es im Rahmen der Erfindung, das vorbeschriebene Verfahren unter anderem auch in einem Schwimmbad, einem Fischzuchtteich od. dgl., wobei es insbesondere
auf eine Reinhaltung des im Behälter befindlichen Wassers
ankommt, anzuwenden. Dabei können nicht nur am Boden abgesetzte Stoffe gezielt fortbewegt werden, sondern ebenso
auch schwimmende Stoffe wie Blätter, Papier od. dgl.

Weiterhin ist es insbesondere zweckmäßig, das erfindungsgemäße Verfahren bei einem Regenbecken oder auch Hochwasserrückhaltebecken vorzusehen, da hier mit äußerst
geringen Investitionskosten und großer Betriebssicherheit
Stoffablagerungen an der Beckensohle gezielt und
stets den jeweiligen Erfordernissen entsprechend
verhindert werden können. Dabei kann der Schlamm
auf einfache Weise entweder zum zur Kläranlage

0068364

führenden Regenbeckenablauf oder zu einem im Hochwasserrückhaltebecken vertieft ausgebildeten Schlammsammelraum bewegt werden, ohne daß irgendwelche
mechanischen Räumeinrichtungskonstruktionen dafür
erforderlich wären.

Bei einem Regenbecken und auch Hochwasserrückhaltebecken kann es besonders günstig sein, die Begasungsstöße zur Fortbewegung des Schlamms ausschließlich
dann durchzuführen, wenn der Ablauf bzw. Überlauf zum
Vorfluter gesperrt ist, so daß der Schlamm zwangsgeführt
nur zum bestimmungsgemäßen Zielort gelangt und nicht
durch etwaige Aufwirbelungen vom abfließenden Wasser
mitgenommen wird. Auch ist es vorteilhaft, die erfindungsgemäße Stoßbegasung in einem Regenbecken während
eines solchen Wasserstandsbereichs durchzuführen, der
unterhalb der Wasserhöchstmarke liegt, da die dabei auftretenden Wasserwalzen nicht vertikalgestreckt, sondern
mehr horizontalgestreckt ausgebildet sind, wodurch ein
größerer Weg bei der Walzenfortbewegung zurückgelegt wird
und damit weniger Düsen bzw. Düsenstränge benötigt
werden.

Besonders vorteilhaft kann das erfindungsgemäße Verfahren zur Eindämmung und zur Fortbewegung von sich
auf einer Wasseroberfläche befindlicher Leichtflüssigkeit (Öl, Benzin, Fett), die z. B. aufgrund eines Lecks
ausgelaufen ist, angewendet werden. Hierbei ist es auf
verhältnismäßig einfache Art und Weise möglich, das
umweltverschmutzende Öl in kurzer Zeit weitgehend restlos zu beseitigen. Dabei kann vorteilhaft ein mindestens
einseitig durch einen Düsenstrang begrenzter Winkelbereich
auf der Wasseroberfläche gebildet werden, wobei das Öl
durch entsprechende Intervall-Gasströme in Richtung
eines vorgegebenen Zielortes bewegt wird.

TIEDTKE – BÜHLING – KINNE

GRUPE – PELLMANN – GRAMS

Patentanwälte und
Vertreter beim EPA
Dipl.-Ing. H. Tiedtke
Dipl.-Chem. G. Bühling
Dipl.-Ing. R. Kinne
Dipl.-Ing. P. Grupe
Dipl.-Ing. B. Pellmann
Dipl.-Ing. K. Grams

Bavariaring 4, Postfach 20 24 03
8000 München 2
Tel.: 089 - 53 96 53
Telex: 5-24 845 tipat
cable: Germaniapatent München

18. Juni 1982

EP 2248

P a t e n t a n s p r ü c h e

1.   Verfahren zur Einwirkung auf in einer vorzugsweise wässrigen Flüssigkeit befindlichen Stoffen wie Schlamm, Sand, Öl oder dergleichen, insbesondere Belebungsbecken einer Abwasserreinigungsanlage, wobei ein Gas durch mehrere Gasaustrittsdüsen einbringbar ist, dadurch gekennzeichnet, daß in Stoffanreicherungsbereichen im wesentlichen bewegungsarmer Zonen der Flüssigkeit das Gas nur aus einem zahlenmäßig geringen Teil der insgesamt vorhandenen Gasaustrittsdüsen stoßartig eingetragen wird.

2.   Verfahren nach vorstehendem Anspruch, dadurch gekennzeichnet, daß der Gasausstoß ausschließlich aus einer einzigen Gasaustrittsdüse erfolgt, wobei die anderen Gasaustrittsdüsen gesperrt sind.

3.   Verfahren nach einem der vorstehenden Ansprüche, dadurch gekennzeichnet, daß der Gasausstoß durch die Gasaustrittsdüsen hintereinander erfolgt, wobei jeweils bei einem Gasausstoß aus einer neu freigegebenen Gasaustrittsdüse der Gasaustritt aus einer bis dahin freien Gasaustrittsdüse gesperrt wird.

4.   Verfahren nach einem der vorstehenden Ansprüche, dadurch gekennzeichnet, daß der Gasausstoß von mindestens einem Stoffanreicherungsbereich eines Beckens
schrittweise hintereinander in Richtung zum Beckeninneren bzw. in Richtung zum Stoffaustrag erfolgt.

5. Verfahren nach einem der vorstehenden Ansprüche,
dadurch gekennzeichnet, daß das Gas grob- bzw. großblasig ausgestoßen wird.

6. Verfahren nach einem der vorstehenden Ansprüche,
dadurch gekennzeichnet, daß der Grobblasen-Gasausstoß
während einer gleichzeitig feinstblasigen Sauerstoff-
bzw. Luftsauerstoffeinbringung in das Abwasser bzw. den
Belebtschlamm durchgeführt wird.

7. Verfahren nach einem der vorstehenden Ansprüche,
dadurch gekennzeichnet, daß der Grobblasen-Gasausstoß
während einer reduzierten bzw. vollständig unterbundenen
sonstigen weiteren Begasung des Abwassers bzw. Belebtschlammes erfolgt.

8. Vorrichtung zur Durchführung des Verfahrens, dadurch
gekennzeichnet, daß den Gasaustrittsdüsen im Becken zum
vorzugsweise gezielten Einzelgasausstoß eine Druckgasverteilervorrichtung zugeordnet ist.

9. Vorrichtung nach vorstehendem Anspruch, dadurch gekennzeichnet, daß die Gasaustrittsdüsen mit einer Rückströmsperre versehen sind.

10. Vorrichtung nach einem der vorstehenden Ansprüche,
dadurch gekennzeichnet, daß die Gasaustrittsdüsen als
in eine Wandung eines als Düsenbelüfter ausgebildeten
Rohres eingebrachte Querlöcher ausgeführt sind.

11. Vorrichtung nach einem der vorstehenden Ansprüche, dadurch gekennzeichnet, daß den Gasaustrittsdüsen bzw. den Düsenbelüftern von der Druckgasverteilervorrichtung abstrebende Einzelzuführrohre zugeordnet sind.

12. Vorrichtung nach einem der vorstehenden Ansprüche, dadurch gekennzeichnet, daß die Druckgasverteilervorrichtung zum Gasausstoß durch ein Einzelzuführrohr und zur Sperrung der übrigen Einzelzuführrohre einen Lochplattenverschiebeteil aufweist.

13. Vorrichtung nach einem der vorstehenden Ansprüche, dadurch gekennzeichnet, daß der Lochplattenverschiebeteil der Druckgasverteilervorrichtung als um eine Achse rotierender Drehverteiler ausgebildet ist.

14. Vorrichtung nach einem der vorstehenden Ansprüche, dadurch gekennzeichnet, daß dem Lochplattenverschiebeteil der Druckgasverteilervorrichtung ein Antriebsaggregat zugeordnet ist.

15. Vorrichtung nach einem der vorstehenden Ansprüche, dadurch gekennzeichnet, daß das Antriebsaggregat des Lochplattenverschiebeteils der Druckgasverteilervorrichtung als vorzugsweise durch das Druckgas getriebener Motor (Druckluftmotor) ausgebildet ist.

16. Vorrichtung nach einem der vorstehenden Ansprüche, dadurch gekennzeichnet, daß der Druckgasverteilervorrichtung zur variablen Druckhöhen- und Wirkdauerdosierung der Gasausstöße ein vorzugsweise elektronisches Impuls- und/oder Zeitsteuergerät zugeordnet ist.

17. Vorrichtung nach einem der vorstehenden Ansprüche, dadurch gekennzeichnet, daß der Druckgasverteilervorrichtung im Gasversorgungssystem ein Druckspeicher
(Gasbehälter) vorgeordnet ist.

18.   Vorrichtung nach einem der vorstehenden Ansprüche,
dadurch gekennzeichnet, daß die Druckgasverteilervorrichtung mit den Gasaustrittsdüsen an einem Gasversorgungssystem einer vorzugsweise mittels Drehbelüftern
erfolgenden feinstblasigen Sauerstoff- bzw. Luftsauerstoffeinbringung ins Abwasser angeschlossen ist.

19.   Vorrichtung nach einem der vorstehenden Ansprüche,
dadurch gekennzeichnet, daß die Gasaustrittsdüsen im
Becken über die Druckgasverteilervorrichtung von einem
vorzugsweise in Unterwasserausführung im Becken angeordneten Gasdruckerzeugeraggregat gespeist werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | EP-A-0 026 619 (ENERGY HARVEST) <br><br> * Seite 8, Zeile 30 - Seite 9, Zeile 26; Abbildungen 7-9 * | 1-4,8, 11 | C 02 F 3/20 <br> B 01 D 21/24 <br> F 16 K 11/06 |
| A | DE-A-2 453 670 (G. HAMBURGER) <br> * Seite 5, Anspruch 1 * | 9 | |
| A | DE-B-1 264 355 (A. SCHREIBER) <br> * Spalte 5, Zeilen 6-17; Figur 2 * | 17 | |
| A | US-A-4 181 614 (THE BRITISH PETROLEUM) <br> * Zusammenfassung * | 1 | |
| A | DE-A-1 750 933 (FESTO) <br> * Seiten 1,2 * | 12-15 | RECHERCHIERTE SACHGEBIETE (Int. Cl. 3) |
| A | DE-A-1 775 829 (FESTO) <br> * Seiten 1,2 * | 12-15 | C 02 F <br> F 16 K |

Der vorliegende Recherchenbericht wurde für alle Patentansprüche erstellt.

| Recherchenort | Abschlußdatum der Recherche | Prüfer |
|---|---|---|
| DEN HAAG | 17-09-1982 | TEPLY J. |